# EUROPÄISCHE PATENTSCHRIFT

(11) **EP 2 580 031 B1**
(45) Veröffentlichungstag und Bekanntmachung des Hinweises auf die Patenterteilung: **20.04.2016**
(21) Anmeldenummer: 11725416.9
(22) Anmeldetag: 08.06.2011
(51) Int. Cl.: B25J 17/02

(54) **ROBOTERMODUL**
ROBOT MODULE
MODULE DE ROBOT

(30) Priorität: 08.06.2010 DE 102010029784; 08.06.2010 DE 102010029786
(43) Veröffentlichungstag der Anmeldung: 17.04.2013
(73) Patentinhaber: Beckhoff Automation GmbH, 33415 Verl (DE)
(72) Erfinder: JÄGER, Michael, A-6706 Bürs (AT); PEHLIVAN, Armin, A-6714 Nüziders (AT); RETTIG, Thomas, 33378 Rheda-Wiedenbrück (DE)
(74) Vertreter: Patentanwaltskanzlei WILHELM & BECK
(86) Internationale Anmeldenummer: PCT/EP2011/059438
(87) Internationale Veröffentlichungsnummer: WO 2011/154429

(56) Entgegenhaltungen:
- US-A- 4 666 362
- US-A1- 2004 146 388

## Beschreibung

Die vorliegende Erfindung betrifft ein Robotermodul gemäß dem Oberbegriff des Anspruchs 1. Ein solches Robotermodul ist aus der US 4,666,362 bekannt. Moderne Fertigungs- und Verpackungsanlagen erfordern in zunehmendem Maße kürzere Taktzeiten bei oftmals komplizierten Verfahrwegen. Um diese zu realisieren, weisen Fertigungs- und Verpackungsanlagen wenigstens eine um zahlreiche Achsen bewegliche Roboterstruktur auf, die einen an der Roboterstruktur angeordneten Aktuator bewegt. Gleichzeitig wird in modernen Fertigungs- und Verpackungsanlagen versucht, bei gleichem Verfahrweg die Taktzeiten zu reduzieren. Um die bestehenden Taktzeiten zu verringern, können beispielsweise die bewegten Massen der eingesetzten Roboter der Fertigungs- und Verpackungsanlagen reduziert werden, um die Roboterkinematik der Roboter schneller beschleunigen zu können.

Zum Aufbau eines massenarmen Roboters eignet sich der aus der US 4,666,362 bekannte Seilroboter. Die bewegten Massen des Seilroboters sind insbesondere dadurch gering, da die Antriebe für die einzelnen verschiedenen Achsen nicht mitbewegt werden müssen. Ferner können Seile des Seilroboters hohe Lasten bei gleichzeitig geringem Gewicht aufnehmen und übertragen.

Der aus der US 4,666,362 bekannte Seilroboter weist eine Antriebsplattform und eine von der Antriebsplattform beabstandete Arbeitsplatte auf, die mit einem Distanzstab mit der Antriebsplattform verbunden sind. Ferner sind die Arbeitsplatte und die Antriebsplattform mit sechs Seilzügen gekoppelt, wobei die Seilzüge durch jeweils einen Seilzugantrieb betätigt werden, der an der Antriebsplattform angeordnet ist und variabel die Länge des korrespondierenden Seilzugs verändert. Durch die gezielte Ansteuerung der einzelnen Seilzugantriebe und damit der Seilzüge kann die Arbeitsplatte in sechs Achsrichtungen bewegt werden. Eine dieser Achsrichtungen ist eine Drehung der Arbeitsplatte um ihre Flächennormale. Der aus der US 4,666,362 bekannte Aufbau des Roboters lässt jedoch nur einen sehr beschränkten Drehwinkel zu.

Aus der US 5,114,300 ist ferner eine Roboterstruktur bekannt, die ein erstes Robotermodul mit einer ersten und einer zweiten Plattform aufweist. Die erste und die zweite Plattform sind mittels verschiedener in ihrer Länge verstellbarer Elemente verbunden. Ferner ist an der zweiten Plattform das zweite Robotermodul angeordnet, das den gleichen Aufbau wie das erste Robotermodul aufweist. Durch die in ihrer Länge verstellbaren Elemente kann die zweite Plattform gegenüber der ersten Plattform im Raum bewegt, verdreht und/oder gekippt werden. Das zweite Robotermodul kann diese Bewegungsarten ebenso gegenüber dem ersten Robotermodul durchführen. Für die in ihrer Länge veränderlichen Elemente werden verschiedenste Ausführungsformen von Linearaktuatoren, wie etwa eine Schraubenstange, eine seilbetätigte Stange oder ein Hydraulik-/ Pneumatikzylinder vorgeschlagen.

Es ist die Aufgabe der Erfindung, ein Robotermodul bereitzustellen, der flexibel an eine kinematische Aufgabe anpassbar ist.

Diese Aufgabe wird durch ein Robotermodul gemäß Anspruch 1 gelöst. Weitere vorteilhafte Ausführungsformen der Erfindung sind in den abhängigen Ansprüchen angegeben.

Erfindungsgemäß wird ein Robotermodul mit einem Roboterantrieb und einem Roboteraufbau vorgeschlagen. Der Roboteraufbau umfasst einen Distanzstab, einen Roboterkopf und wenigstens einen Steuerarm. Eine Befestigungsgruppe des Roboterantriebs und eine Befestigungsgruppe des Roboterkopfes sind über den Distanzstab und den Steuerarm miteinander verbunden. Eine erste Befestigungsfläche der Befestigungsgruppe weist einen ersten Schwerpunkt und eine zweite Befestigungsfläche der Antriebsplattform einen zweiten Schwerpunkt auf. Dabei ist der erste und der zweite Stabaufhängepunkt des Distanzstabs an dem ersten und dem zweiten Schwerpunkt angeordnet. Dies hat den Vorteil, dass diese Ausgestaltung des Robotermoduls besonders stabil ist. Ferner wird gewährleistet, dass der Roboterkopf besonders schnell und mit geringem Energieaufwand beschleunigt werden kann, so dass die Verfahrzeiten innerhalb des Arbeitsraums des Robotermoduls verringert werden können.

Gemäß der Erfindung umfasst der Roboterkopf eine Aktuatorgruppe, die mit der Befestigungsgruppe mittels eines Übersetzungsgetriebes gekoppelt ist, wobei das Übersetzungsgetriebe ein Verdrehen der Befestigungsgruppe in eine Verdrehung der Aktuatorgruppe gemäß einem vorbestimmten Übersetzungsverhältnis umsetzt. Auf diese Weise wird gewährleistet, dass ein an der Aktuatorgruppe angeordneter Aktuator, beispielsweise ein Greifer, einen vergrößerten Drehbereich aufweist.

In einer Ausführungsform der Erfindung ist der Distanzstab mit einer Antriebsplattform des Roboterantriebs und mit dem Roboterkopf des Roboteraufbaus über ein Gelenk torsionssteif gegenüber einer Verdrehung um eine Längsachse des Distanzstabs ausgelegt. Auf diese Weise wird gewährleistet, dass ein Verdrehen des Distanzstabs vermieden wird.

In einer weiteren Ausführungsform der Erfindung ist das torsionssteife Gelenk als homokinetisches Gelenk oder Kardangelenk ausgebildet. Auf diese Weise wird gewährleistet, dass die Befestigung des Distanzstabs an der Antriebsplattform und dem Roboterkopf torsionssteif ist, aber gleichzeitig zwei Freiheitsgrade zum Schwenken des Gelenks zur Verfügung stehen.

In einer weiteren Ausführungsform der Erfindung ist der Distanzstab des Robotermoduls teleskopartig ausgebildet und weist eine yeränderliche Länge auf. Auf diese Weise kann dem Robotermodul ein zusätzlicher Freiheitsgrad bzw. eine zusätzliche Bewegungsdimension zur Verfügung gestellt werden. In einer weiteren Ausführungsform umfasst das Robotermodul wenigstens drei Seilzüge mit korrespondierenden Seilzugantrieben und einem Distanzstab. Jeder Seilzug ist in einem ersten Seilaufhängepunkt mit der Befestigungsgruppe und in einem zweiten Seilaufhängepunkt mit der Antriebsplattform verbunden. Die ersten Seilaufhängepunkte der Befestigungsgruppe bilden eine erste Befestigungsfläche und die zweiten Seilaufhängepunkte der Antriebsplattform bilden eine zweite Befestigungsfläche. Der Distanzstab ist an einem ersten Stabaufhängepunkt an der Befestigungsgruppe und an einem zweiten Stabaufhängepunkt an der Antriebsplattform befestigt. Dabei ist der erste Stabaufhängepunkt innerhalb der ersten Befestigungsfläche und der zweite Stabaufhängepunkt innerhalb der zweiten Befestigungsfläche angeordnet. Ferner ist die Befestigungsgruppe oder die Antriebsplattform des ersten Seilrobotermoduls an der Befestigungsgruppe oder an der Antriebsplattform des zweiten Seilrobotermoduls angeordnet. Dies hat den Vorteil, dass ein Seilrobotermodul zur Verfügung gestellt werden kann, dessen bewegte Massen besonders gering sind, wodurch der Seilroboter mit hoher Beschleunigung und Geschwindigkeit in einem Arbeitsraum verfahren werden kann.

In einer weiteren Ausführungsform der Erfindung weist das Seilrobotermodul wenigstens drei Zusatzseilzüge auf, wobei jeweils ein Seilzug und ein Zusatzseilzug benachbart nebeneinander angeordnet sind. Ferner sind jeweils ein Seilzug und ein benachbarter Zusatzseilzug in jeweils einem ersten Seilaufhängepunkt des Seilzugs an der Befestigungsgruppe befestigt. Die Zusatzseilzüge sind ferner in weiteren zweiten Seilaufhängepunkten an der Antriebsplattform befestigt. Die zweiten Seilaufhängepunkte der Seilzüge bilden ein erstes Dreieck und die weiteren zweiten Seilaufhängepunkte der Zusatzseilzüge bilden ein zweites Dreieck, wobei das zweite Dreieck gegenüber dem ersten Dreiecks verdreht ist. Auf diese Weise wird ein Seilrobotermodul zur Verfügung gestellt, das um zahlreiche Achsen verschiebbar, kippbar und/oder verdrehbar ist, und so komplizierte kinematische Bewegungsabläufe nachfahren kann.

In einer weiteren Ausführungsform der Erfindung ist für jeden Zusatzseilzug ein korrespondierender Zusatzseilzugantrieb vorgesehen. Auf diese Weise können die Zusatzseilzüge ebenso wie die ursprünglichen Seilzüge betätigt und angesteuert werden.

In einer weiteren Ausführungsform der Erfindung weisen die ersten Seilaufhängepunkte der Seilzüge und der Zusatzseilzüge jeweils einen ersten Abstand auf. Ferner weisen die zweiten Seilaufhängepunkte der Seilzüge zu den benachbarten weiteren zweiten Seilaufhängepunkten der Zusatzseilzüge jeweils einen zweiten Abstand auf, wobei die ersten Abstände zu den korrespondierenden zweiten Abständen im gleichen Verhältnis stehen. Auf diese Weise wird ein Seilrobotermodul zur Verfügung gestellt, der ein besonders günstiges Nachschwingverhalten aufweist.

In einer weiteren Ausführungsform der Erfindung ist der Seilzug mittels wenigstens einer Umlenkrolle geführt, wobei die Umlenkrolle an der Antriebsplattform befestigt ist und ausgelegt ist, eine Zugkraft des Seilzugs zumindest teilweise auf die Antriebsplattform zu stützen. Auf diese Weise kann der Seilzugantrieb bauraumgünstig angeordnet werden, ohne die Funktionsweise des Roboterantriebs zu beeinträchtigen.

In einer weiteren Ausführungsform der Erfindung ist das Übersetzungsgetriebe als Planetengetriebe mit einem Sonnenrad ausgebildet, das mit der Aktuatorgruppe verbunden ist. Auf diese Weise kann eine besonders flache Ausbildung des Roboterkopfs zur Verfügung gestellt werden.

In einer weiteren Ausführungsform der Erfindung sind ein Hohlrad des Planetengetriebes mit der Befestigungsgruppe und die Planeten des Planetengetriebes mit dem Distanzstab verbunden. Dies gewährleistet einen einfachen Aufbau des Roboterkopfs.

In einer weiteren Ausführungsform der Erfindung umfasst die Befestigungsgruppe einen Planetenträger, wobei der Planetenträger drehbar an einer Befestigungsplatte der Befestigungsgruppe gelagert ist. Die Befestigungsplatte ist mit dem Steuerarm verbunden. Ferner ist der Planetenträger mit dem Distanzstab verbunden. Auf diese Weise kann eine Rotation des Planetenträgers um die Flächennormale der Befestigungsgruppe vermieden werden.

In einer weiteren Ausführungsform der Erfindung ist die Aktuatorgruppe mittels einer an dem Planetenträger befestigten Bolzenverschraubung axial gelagert. Dies stellt eine einfache Möglichkeit zur Lagerung der Aktuatorgruppe dar.

In einer weiteren Ausführungsform der Erfindung umgreift die Befestigungsplatte das Hohlrad des Planetengetriebes radial, wobei die Befestigungsplatte eine erste radiale Lagerung für den Planetenträger und eine zweite radiale Lagerung für die Aktuatorgruppe bereitstellt. Dabei ist das Hohlrad zwischen der ersten Lagerung und der zweiten Lagerung angeordnet. Dies ermöglicht eine besonders kompakte Ausbildung des Roboterkopfs.

In einer weiteren Ausführungsform der Erfindung umfasst der Roboter eine Trennwand, die zwischen dem Roboterantrieb und dem Roboteraufbau angeordnet ist und den Roboterantrieb räumlich von dem Roboteraufbau trennt. Dabei weist die Trennwand wenigstens eine Steuerarmdurchführung auf. Dieser Aufbau ist besonders für einen Einsatz in der Lebensmittelindustrie geeignet. Zur Reinigung des Roboteraufbaus werden hierbei aggressive und gegebenenzalls Korrosive Reinigungsmittel eingesetzt werden, wobei durch die räumliche Trennung des Roboterantriebs vom Roboteraufbau der Roboterantrieb kostengünstig und einfach vor den Reinigungsmitteln geschützt werden kann. Der Vorteil resultiert auch darin, dass für den Seilzugantrieb Komponenten verwendet werden können, die üblicherweise keine Reinigungsmittel-resistente Abdichtung aufweisen.

Erfindungsgemäß weist ein Roboter wenigstens ein erstes und ein zweites Robotermodul auf, wobei die Befestigungsgruppe oder die Antriebsplattform des ersten Robotermoduls an der Befestigungsgruppe oder an der Antriebsplattform des zweiten Robotermoduls angeordnet ist. Dies hat den Vorteil, dass ein Roboter zur Verfügung gestellt werden kann, dessen bewegte Massen besonders gering sind, wodurch der Roboter mit hoher Beschleunigung und Geschwindigkeit in einem Arbeitsraum verfahren werden kann. Ferner kann durch die beiden Robotermodule der Roboter flexibel an seine kinematische Aufgabe angepasst werden.

Nachfolgend wird die Erfindung anhand von Figuren näher erläutert. Dabei zeigen:
Figur 1 eine perspektivische Ansicht eines Seilroboters;
Figur 2 eine schematische Darstellung eines Schnitts durch einen Roboterkopf des in Figur 1 gezeigten Seilroboters;
Figur 3 eine schematische Draufsicht auf den in Figur 2 gezeigten Roboterkopf;
Figur 4 eine schematische Unteransicht des in Figur 2 gezeigten Roboterkopfs;
Figur 5 eine Abwandlung des in Figur 1 gezeigten Aufbaus des Seilroboters;
Figur 6 eine schematische Darstellung des in Figur 1 gezeigten Seilroboters als eine erstes Seilrobotermoduls;
Figur 7 ein abgewandeltes zweites Seilrobotermodul, das auf dem in Figur 6 gezeigten ersten Seilrobotermodul basiert;
Figur 8 ein abgewandeltes drittes Seilrobotermodul, das auf dem in Figur 6 gezeigten ersten Seilrobotermodul basiert;
Figur 9 ein abgewandeltes viertes Seilrobotermodul, das auf dem in Figur 8 gezeigten dritten Seilrobotermodul basiert;
Figur 10 einen ersten Seilroboter mit zwei in Figur 6 gezeigten Seilrobotermodulen; und
Figur 11 einen kaskadierten zweiten Seilroboter mit den in Figuren 6 bis 9 gezeigten Seilrobotermodulen.

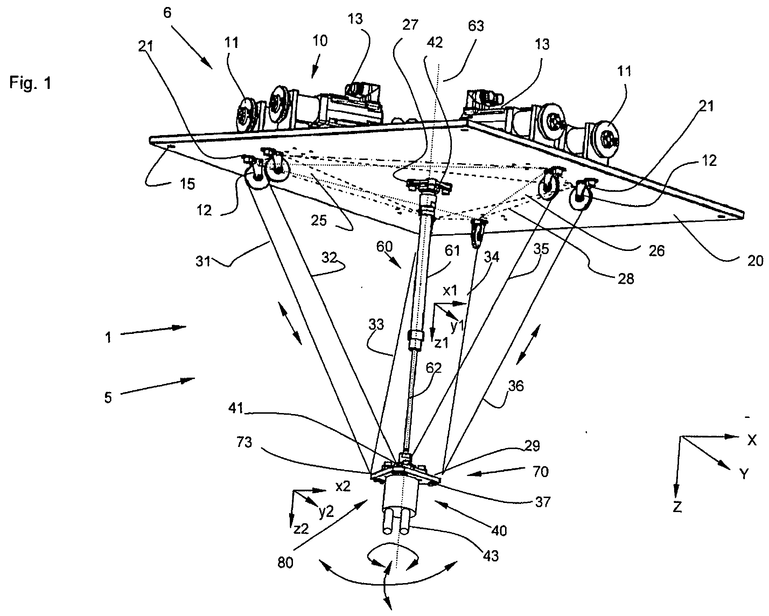

Figur 1 zeigt eine perspektivische Ansicht eines Seilroboters 1, der einen Roboteraufbau 5 und einen Roboterantrieb 6 umfasst. In Figur 1 sind ferner ein globales Koordinatensystem mit aufeinander senkrecht stehenden Achsen x, y, z und zwei weitere lokale Koordinatensysteme für die verfahrbaren Komponenten des Roboteraufbaus 5 mit aufeinander senkrecht stehenden Achsen x₁, y₁, z₁ bzw. x₂, y₂, z₂ dargestellt. Die gezeigten Koordinatensysteme sollen die Funktionsweise des Seilroboters 1 verdeutlichen.

Der Roboterantrieb 6 des Seilroboters 1 umfasst eine quadratisch ausgeführte Antriebsplattform 20 mit im Eckbereich angeordneten Befestigungsöffnungen 15 zur Befestigung der Antriebsplattform 20 an einem nicht dargestellten Trägergestell. Der Roboterantrieb 6 umfasst ferner sechs auf der Oberseite der quadratisch ausgeführten Antriebsplattform 20 angeordnete Seilzugantriebe 10. Die Seilzugantriebe 10 umfassen jeweils einen Elektromotor 13 mit einem Antriebsgetriebe und einer damit verbunden Seiltrommel 11. Ferner ist an jedem Seilzugantrieb 10 noch ein Sensor (nicht dargestellt) vorgesehen, wodurch die Position der zugehörigen Seiltrommel 11 erfasst werden kann.

Der Roboteraufbau 5 des Seilroboters 1 umfasst einen Distanzstab 60, sechs Seilzüge 31 bis 36 als Steuerarme mit korrespondierenden Umlenkrollen 12 und einen Roboterkopf 40. An der Unterseite, der Anordnung der Seilzugantriebe 10 gegenüberliegend, sind die Umlenkrollen 12 an der Antriebsplattform 20 des Roboterantriebs 6 befestigt. Die Umlenkrollen 12 umfassen jeweils eine in der Antriebsplattform 20 angeordnete erste Seilzugdurchführung 21. Der Distanzstab 60 verbindet den Roboterkopf 40 mit der Antriebsplattform 20 des Roboterantriebs 6. Hierzu ist der Distanzstab 60 vorzugsweise mittels eines ersten oberen Gelenks 42 mit der Unterseite der Antriebsplattform 20 des Roboterantriebs 6 verbunden. An der Oberseite des Roboterkopfs 40 ist ein unteres zweites Gelenk 41 angeordnet, das den Roboterkopf 40 mit dem unteren Ende des Distanzstabs 60 verbindet. An der Unterseite des Roboterkopfs 40 ist vorzugsweise ein Greifer 43 angeordnet.

Der Distanzstab 60 des Roboteraufbaus 5 ist gegenüber der Antriebsplatte 20 des Roboterantriebs 6 schwenkbar angeordnet und weist ein eigenes Koordinatensystem mit den aufeinander senkrecht stehenden Achsen x₁, y₁, z₁ auf. In der in Figur 1 dargestellten Position des Distanzstabs 60 verlaufen die Achsen x₁, y₁, z₁ des Koordinatensystems des Distanzstabs 60 zu dem globalen Koordinatensystem x, y, z etwa parallel.

Der Distanzstab 60 weist einen teleskopartigen Aufbau mit einem oberen äußeren Teil 61 des Distanzstabs 60 und einen in den äußeren Teil 61 einfahrbaren unteren Teil 62 auf. Dadurch weist der Distanzstab 60 eine veränderliche Länge auf. Der Distanzstab 60 weist ferner innenseitig ein nicht weiter dargestelltes Federelement auf, das ausgelegt ist, den unteren Teil 62 des Distanzstabs 60 aus dem oberen Teil 61 zu drücken, wodurch der Distanzstab 60 den Roboterkopf 40 von der Antriebsplattform 20 wegdrückt (in Figur 1 in z-Richtung bzw. z₁-Richtung). Der Distanzstab 60 kann beispielsweise als Luftdruckfeder, Öldruckfeder oder als Stabfeder ausgeführt sein.

Der Distanzstab 60 des Roboteraufbaus 5 ist torsionssteif ausgebildet, so dass der untere Teil 62 des Distanzstabs 60 gegenüber dem oberen Teil 61 um eine Längsachse 63 (z₁-Achse) des Distanzstabs 60 nicht verdrehbar ist. Eine Torsionssteifigkeit des Distanzstabs 60 kann beispielsweise dadurch erreicht werden, dass der untere Teil 62 eine Ausbuchtung (nicht dargestellt) aufweist, die parallel zur Längsachse 63 des Distanzstabs 60 verläuft und umfangsseitig am unteren Teil 62 angeordnet ist. Der obere Teil 61 weist eine zur Ausbuchtung korrespondierende Nut (nicht dargestellt) auf, in die die Ausbuchtung des unteren Teils 62 eingreift, um so ein Verdrehen des unteren Teils 62 des Distanzstabs 60 gegenüber dem oberen Teil 61 des Distanzstabs 60 zu vermeiden. Selbstverständlich sind auch andere Ausbildungen des Distanzstabs 60 denkbar. Wesentlich in der Gestaltung des Distanzstabs 60 ist jedoch die torsionssteife Ausführung des Distanzstabs 60.

Der Distanzstab 60 des Roboteraufbaus 5 ist, wie bereits oben erwähnt, an der Antriebsplattform 20 unterseitig mittels des oberen Gelenks 42 und an dem Roboterkopf 40 oberseitig mittels des unteren Gelenks 41 befestigt. Dabei ist das obere Gelenk 42 in der in Figur 1 dargestellten Ausführungsform drehfest bzw. torsionssteif um die z₁-Achse bzw. die Flächennormale (z-Achse) der Antriebsplattform 20 des Roboterantriebs 6 ausgeführt, so dass der obere Teil 61 des Distanzstabes 60 nicht um die z₁-Achse verdrehbar ist, jedoch ein Schwenken des Distanzstabs 60 um die x-Achse und die y-Achse an der Antriebsplattform 20 ermöglicht wird.

In gleicher Weise ist ebenso das untere Gelenk 41 am Roboterkopf 40 ausgebildet, so dass das untere Gelenk 41 zwar um die x₁-Achse und y₁-Achse geschwenkt werden, jedoch nicht um die z₁-Achse (bzw. z₂-Achse) verdreht werden kann. Das untere Gelenk 41 kann dabei, wie auch das obere Gelenk 42, beispielsweise als homokinetisches Gelenk oder als Kardangelenk ausgeführt sein. Selbstverständlich sind weitere Ausbildungsformen des oberen bzw. des unteren Gelenks 41, 42 denkbar, die eine Verdrehung des unteren Gelenks 41 um die Längsachse 63 des Distanzstabs 60 verhindern.

An jeder Seiltrommel 11 des Seilzugantriebs 10 ist jeweils einer der Seilzüge 31 bis 36 befestigt. Die Seilzüge 31 bis 36 sind ferner über die ersten Seilzugdurchführungen 21 durch die Antriebsplattform 20 und über die Umlenkrollen 12 an eine Befestigungsgruppe 70 des Roboterkopfs 40 geführt, an der die Seilzüge 31 bis 36 befestigt sind. Dabei sind die Umlenkrollen 12 als Abspannpunkte der Seilzüge 31 bis 36 an der Antriebsplattform 20 ausgebildet und übertragen jeweils einen Teil einer Zugkraft der Seilzüge 31 bis 36 auf die Antriebsplattform 20.

Die Umlenkrollen 12, als erste Seilaufhängepunkte ausgelegt, bilden eine sechseckförmige erste Befestigungsfläche 28 an der Antriebsplattform 20 des Roboterantriebs 6 aus. Die erste Befestigungsfläche 28 wird aus je zwei Dreiecken 25, 26, die in Figur 1 gestrichelt dargestellt sind, gebildet. Die Eckpunkte der beiden Dreiecke 25, 26, sind durch die ersten Seilaufhängepunkte bzw. die Umlenkrollen 12 bestimmt, wobei ein erstes Dreieck 25 durch die Umlenkrollen 12 der drei Seilzüge 31, 34, 35 bestimmt ist. Das zweite Dreieck 26 wird durch die die Umlenkrollen 12 der Seilzüge 32, 33, 36 gebildet. Das zweite Dreieck 26 entspricht dem ersten Dreieck 25 geometrisch, jedoch ist das zweite Dreieck 26 um einen Schwerpunkt 27 des ersten Dreiecks 25 verdreht. Dadurch sind die Umlenkrollen 12 bzw. die ersten Seilaufhängepunkte auf einem Umkreis (nicht dargestellt) um den Schwerpunkt 27 des ersten Dreiecks 25 angeordnet.

In der in Figur 1 dargestellten Ausführungsform ist eine geringe Verdrehung des zweiten Dreiecks 26 zum ersten Dreieck 25 gewählt, so dass die Umlenkrollen 12 etwa paarweise auf der Antriebsplattform 20 angeordnet sind, wobei die Paare der Umlenkrollen 12 jeweils durch eine Umlenkrolle 12 des ersten Dreiecks 25 und durch eine zur Umlenkrolle 12 des ersten Dreiecks 25 benachbarte Umlenkrolle 12 des zweiten Dreiecks 26 gebildet werden. Dabei weisen die beiden Umlenkrollen 12 jeweils einen Abstand zwischen den Paaren der Umlenkrollen 12 auf.

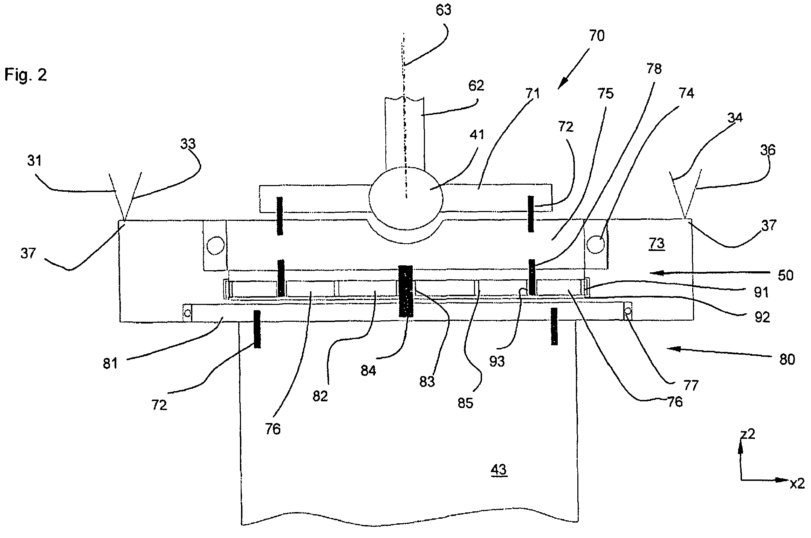

Der Roboterkopf 40 umfasst eine oberseitig angeordnete Befestigungsgruppe 70 und eine daran unterseitig angeordnete Aktuatorgruppe 80 mit dem Greifer 43. Die Aktuatorgruppe 80 ist mittels eines in Figuren 2 bis 4 dargestellten und näher beschriebenen Übersetzungsgetriebes 50 mit der Befestigungsgruppe 70 gekoppelt.

Der Roboterkopf 40 ist gegenüber der Antriebsplatte 20 und dem Distanzstab 60 schwenkbar angeordnet und weist ein eigenes Koordinatensystem mit den aufeinander senkrecht stehenden Achsen x₂, y₂, z₂ auf. In der in Figur 1 dargestellten Position des Roboterkopfes 40 verlaufen die Achsen x₂, y₂, z₂ des Koordinatensystems des Roboterkopfes 40 zu dem globalen Koordinatensystem x, y, z etwa parallel.

Die Befestigungsgruppe 70 des Roboterkopfs 40 umfasst eine vorzugsweise etwa dreiecksförmig ausgebildete Befestigungsplatte 73, wobei in jedem Eckbereich der Befestigungsplatte 73 in Seilaufhängepunkten 37 jeweils zwei Seilzüge 31 bis 36 an der Befestigungsplatte 73 befestigt sind. In den Seilaufhängepunkten 37 werden jeweils ein Seilzug 31, 34, 35 des ersten Dreiecks 25 und ein Seilzug 32, 33, 36 des zweiten Dreiecks 26 zusammengeführt, wobei jedoch die Seilzüge 31 bis 36 der beiden Dreiecke 25, 26 zusammengeführt werden, deren Umlenkrollen 12 zueinander beabstandet an der Antriebsplattform 20 angeordnet sind, wobei jeweils ein in dem zweiten Seilzugaufhängepunkt 37 zusammengeführter Seilzug 31-36 von einem unterschiedlichen Paar von Umlenkrollen 12 stammt. So sind beispielsweise der Seilzug 35 des ersten Dreiecks 25 und der Seilzug 32 des zweiten Dreiecks 26 in dem in der Figur 1 zum Betrachter vorderseitig angeordneten Seilaufhängepunkt 37 zusammengeführt und an der Befestigungsplatte 73 befestigt.

Die Seilaufhängepunkte 37 der Befestigungsplatte 73 weisen jeweils einen zweiten Abstand zueinander auf, wobei die jeweiligen zweiten Abstände in gleichem Verhältnis zu den jeweiligen ersten Abständen der Umlenkrollen 12 stehen. In der Ausführungsform ist das Verhältnis der beiden Abstände zueinander derart gewählt, dass die Seilzüge 31 bis 36 von den Umlenkrollen 12 zu den zweiten Befestigungspunkten 37 in unverdrehtem Zustand des Roboterkopfs 40 bzw. unverdreht bezüglich der z₂-Achse der Befestigungsplatte 73 etwa parallel verlaufen, wobei die Seilzüge 31 bis 36 von jeweils einem Paar von Umlenkrollen 12 kommend an zwei nebeneinander angeordneten zweiten Seilaufhängepunkten 37 befestigt werden. Es ist aber auch eine andere Anordnung der Seilzüge 31 bis 36 an dem Roboterkopf 40 der und/oder an den Umlenkrollen 12 an der Antriebsplattform 20 denkbar.

Um eine Position des Roboterkopfs 40 in einem Verfahrraum des Seilroboters 1 festzulegen, drückt der Distanzstab 60 den Roboterkopf 40, wie oben erläutert, von der Antriebsplattform 20 weg. Die Seilzüge 31 bis 36 nehmen in der Ausführungsform die Druckkraft des Distanzstabs 60 auf und leiten diese zumindest teilweise über die Umlenkrollen 12 an die Antriebsplattform 20 weiter. Ferner sind die Seilzüge 31 bis 36 ausgelegt, eine am Greifer 43 angreifende Kraft, beispielsweise durch eine zu verfahrende Last (nicht dargestellt), aufzunehmen und ebenso an der Antriebsplattform 20 abzustützen.

Werden die Seilzüge 31 bis 36 über die Seilzugantriebe 10 betätigt, so wird die Länge des Seilzuges 31 bis 36 entsprechend gelängt oder verkürzt. Auf diese Weise kann der Roboterkopf 40 im Verfahrraum in der in Figur 1 dargestellten Ausführungsform um die drei Achsen des globalen Koordinatensystems x, y, z verfahren werden. Ferner kann der Roboterkopf 40 um die x₁-Achse und y₁-Achse gekippt und um die Flächennormale (z₂-Achse) der Befestigungsplatte 73 der Befestigungsgruppe 70 verdreht werden. Um eine gleichmäßige Kraftverteilung an den Seilzügen 31 bis 36 beim Verfahren des Roboterkopfs 40 zu gewährleisten, ist der Distanzstab 60 mit dem oberen und unteren Gelenk 41, 42 in jeweils einem Schwerpunkt der Befestigungsfläche 28, 29 angeordnet.

Um den Greifer 43 der Aktuatorgruppe 80 um die z₂-Achse der Befestigungsplatte 73 der Befestigungsgruppe 70 zu drehen, werden die Seilzugantriebe 10 des Roboterantriebs 6 derart angesteuert, dass die Seilzüge 32, 33, 36 angezogen werden bzw. deren Länge verkürzt wird, während hingegen in gleicher Weise die Längen der Seilzüge 31, 35, 34 gelängt werden. Entsprechend der Längung bzw. der Verkürzung der Seilzüge 31 bis 36 wird die Befestigungsgruppe 70 bzw. die Befestigungsplattform 73 des Roboterkopfs 40 um die z₂-Achse verdreht.

Auf eine Übersetzung der Verdrehung um die z₂-Achse der Befestigungsgruppe 70 zu dem Greifer 43 der Aktuatorgruppe 80 mittels eines Übersetzungsgetriebes 50 wird gesondert in den Figuren 2 bis 4 eingegangen.

Alternativ zu der hier dargestellten Ausführungsform ist es denkbar, dass das zweite Dreieck 26 der ersten Seilaufhängepunkte bzw. der Umlenkrollen 12 zum ersten Dreieck 25 der Umlenkrollen 12 derart um den Schwerpunkt 27 des ersten Dreiecks 25 verdreht ist, dass das zweite Dreieck 26 mit dem ersten Dreieck 25 überlappt und die Umlenkrollen 12 des zweiten Dreiecks 26 an den Umlenkrollen 12 des ersten Dreiecks 25 angeordnet sind. Dies resultiert in schräg verlaufenden Seilzügen 31 bis 36, wobei in Figur 1 gemäß der Alternative beispielsweise der Seilzug 32 zusammen mit dem Seilzug 31 einen ersten Seilaufhängepunkt aufweist. Die beiden Seilzüge 31, 32 sind jedoch an der Befestigungsplatte 73 der Befestigungsgruppe 70 in zwei unterschiedlichen Seilaufhängepunkten 37 mit jeweils einem weiteren Seilzug 33 bis 36 befestigt. Dies gewährleistet eine besonders stabile Ausführung des Seilroboters 1.

Es wird darauf hingewiesen, dass anstatt der quaderförmigen Ausbildung der Antriebsplattform 20 auch zahlreiche andere Ausbildungsformen der Antriebsplattform 20, wie etwa kreisförmig, trapezförmig oder vieleckförmig, denkbar sind.

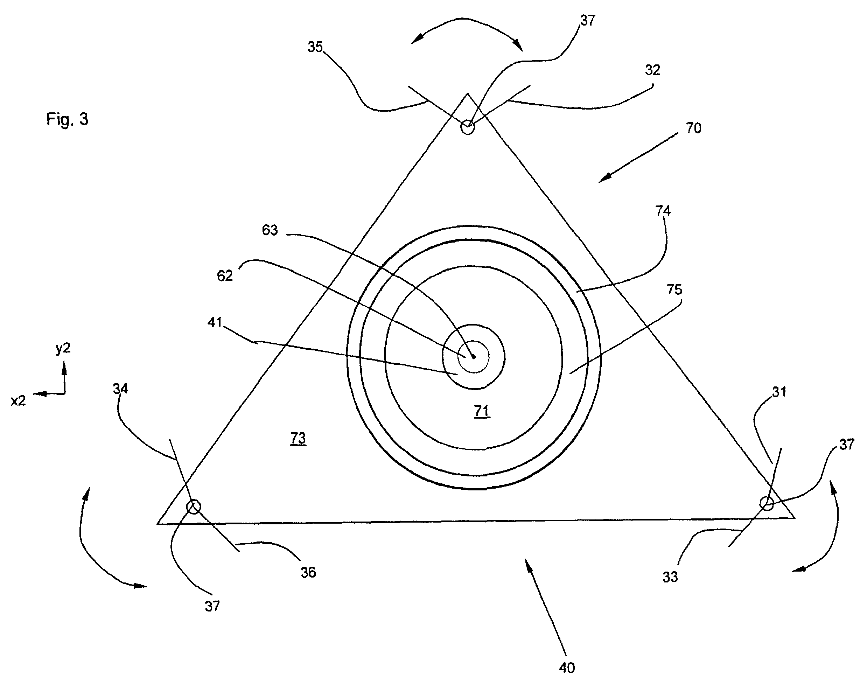

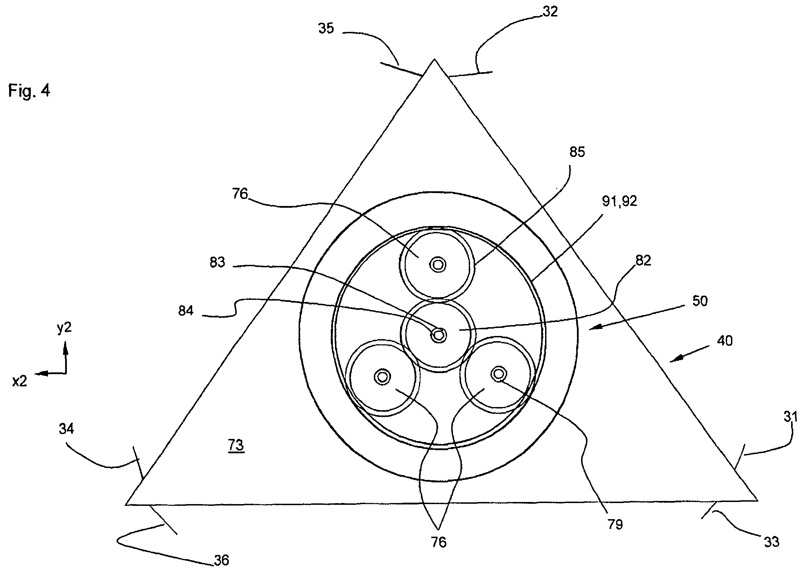

Figur 2 zeigt eine schematische Darstellung eines Schnitts durch den in Figur 1 gezeigten Roboterkopf 40 in der x₂-z₂-Ebene auf Höhe der Mitte des unteren Gelenks 41. Eine schematische Draufsicht auf den Roboterkopfs 40 ist in Figur 3 und eine schematische Unteransicht des Roboterkopfs 40 in teilmontiertem Zustand in Figur 4 dargestellt.

Die Befestigungsgruppe 70 umfasst, wie oben erläutert, neben der Befestigungsplatte 73 und einem Gelenkträger 71 das Übersetzungsgetriebe 50. Das Übersetzungsgetriebe 50 ist in Figur 2 bis 4 als Planetengetriebe ausgebildet, das ein Hohlrad 92, vorzugsweise drei Planetenräder 76, einen Planetenträger 75 und ein Sonnenrad 82 umfasst. Zusätzlich umfasst der Planetenträger 75 des Planetengetriebes 50 einen Befestigungsbolzen 84 zur Befestigung der Aktuatorgruppe 80 und korrespondierend zu den Planetenrädern 76 drei Planetenträgerbolzen 78 zur Befestigung der Planetenräder 76. Die mit der Befestigungsgruppe 70 gekoppelte Aktuatorgruppe 80 umfasst neben dem Greifer 43 eine mit dem Greifer 43 verbundene Arbeitsplatte 81.

Die Planetenräder 76 und das Sonnenrad 82 des Planetengetriebes 50 sind als Stirnräder ausgeführt und weisen umfangsseitig eine Außenverzahnung 85 auf, die zu einer an einer inneren Umfangsfläche angeordneten Innenverzahnung 91 des Hohlrads 92 korrespondiert.

Der Planetenträger 75 des Planetengetriebes 50 wird von der Befestigungsplatte 73 der Befestigungsgruppe 70 vollständig radial umgriffen. An einer radialen außen liegenden Umfangsfläche des Planetenträgers 75 ist eine erste Lagerung 74 des Planetenträgers 75 vorgesehen, die an einer Innenseite der Befestigungsplatte 73 angeordnet ist. Die erste Lagerung 74 des Planetenträgers 75 gewährleistet sowohl eine radiale als auch eine axiale Befestigung des Planetenträgers 75 an der Befestigungsplatte 73.

An der zur Gelenkplatte 71 gegenüberliegenden Unterseite des Planetenträgers 75 sind mittels dreier Planetenträgerbolzen 78 jeweils ein Planetenrad 76 des Planetengetriebes 50 befestigt. Die Planetenträgerbolzen 78 stellen den Planetenrädern 76 des Planetengetriebes 50 eine axiale und radiale zweite Lagerung 93 zur Verfügung.

Zwischen den in Figur 2 dargestellten Planetenrädern 76 ist das Sonnenrad 82 des Planetengetriebes 50 mittig angeordnet. Das Sonnenrad 82 ist unterseitig mittels der Befestigungselemente 72 an der Arbeitsplatte 81 der Aktuatorgruppe 80 befestigt.

Die Arbeitsplatte 81 der Aktuatorgruppe 80 ist radial umfangsseitig durch eine dritte Lagerung 77 radial an der Befestigungsplatte 73 gelagert. Axial wird die Arbeitsplatte 81 der Aktuatorgruppe 80 mittels des Befestigungsbolzens 84, der an der Unterseite des Planetenträgers 75 des Planetengetriebes 50 angeordnet ist, an dem Planetenträger 75 gelagert.

Zwischen der ersten Lagerung 74 des Planetenträgers 85 des Planetengetriebes und der dritten Lagerung 77 der Arbeitsplatte 81 der Aktuatorgruppe 80 ist das Hohlrad 92 des Planetengetriebes 50 an der Befestigungsplatte 73 der Befestigungsgruppe 70 angeordnet. Das Hohlrad 92 kann als separate Komponente des Planetengetriebes 50 ausgeführt und an der Befestigungsplatte 73 der Befestigungsgruppe 70 befestigt sein oder einstückig mit der Befestigungsplatte 73 der Befestigungsgruppe 70 ausgeführt sein.

In montiertem Zustand greift radial außen liegend die Außenverzahnungen 85 der Planetenräder 76 in die Innenverzahnung 91 des Hohlrads 92 ein. Ferner greift die Außenverzahnung 85 der Planetenräder 76 ebenso radial innen liegend in die Außenverzahnung 85 des Sonnenrades 82 ein.

Der Gelenkträger 71 der Befestigungsgruppe 70 ist oberhalb der Befestigungsplatte 73 angeordnet und verbindet mittels der Befestigungselemente 72 das untere Gelenk 41 mit dem unterseitig an dem Gelenkträger 71 angeordneten Planetenträger 75 des Planetengetriebes 50.

Der Planetenträger 75 des Planetengetriebes 50 ist über den Gelenkträger 71 der Befestigungsgruppe 70, das untere Gelenk 41, den torsionssteifen Distanzstab 60 sowie das obere Gelenk 42 mit der Antriebsplattform 20 verbunden, wodurch der Planetenträger 75 des Planetengetriebes 50 drehfest hinsichtlich der Verdrehung um die z₂-Achse ist.

Wird durch eine entsprechende Ansteuerung der Seilzugantriebe 10 des Roboterantriebs 6 die Befestigungsplatte 73 der Befestigungsgruppe 70 um die z₂-Achse verdreht, so wird ebenso das mit der Befestigungsplatte 73 verbundene Hohlrad 92 des Planetengetriebes 50 verdreht. Durch die in die Innenverzahnung 91 eingreifenden Planetenräder 76 werden diese in Rotation versetzt, wodurch wiederum das Sonnenrad 82 des Planetengetriebes 50 angetrieben wird. Aufgrund der unterschiedlichen Durchmesser des Sonnenrads 82, der Planetenräder 76 und des Hohlrads 92 des Planetengetriebes wird ein Drehwinkel, um den die Befestigungsplatte 73 der Befestigungsgruppe 70 um die z₂-Achse verdreht wird, mittels des Übersetzungsverhältnisses des Planetengetriebes 50 in einen übersetzten Drehwinkel an dem Sonnenrad 82 übersetzt. Das Sonnenrad 82 des Planetengetriebes 50 verdreht die am Sonnenrad 82 angeordnete Arbeitsplatte 81 der Aktuatorgruppe 80 mit dem Greifer 43 um die z₂-Achse

Wird für das Planetengetriebe 50 vorteilhafterweise ein Übersetzungsverhältnis von kleiner als 1 gewählt, so hat dies zur Folge, dass der Drehwinkel, um den die Befestigungsplatte 73 der Befestigungsgruppe 70 verdreht wird, entsprechend dem Übersetzungsverhältnis des Planetengetriebes 50 vergrößert ist. Dies gewährleistet, dass dem Greifer 43 ein vergrößerter Aktionsradius bzw. eine vergrößerte Drehfreiheit zur Verfügung gestellt werden kann, während hingegen die Massen des Roboterkopfs 40 gleichzeitig gering gehalten werden können. Ferner kann auf eine zusätzliche Verkabelung für einen Antrieb des Greifers 43 des Roboterkopfs 40 zur Verdrehung des Greifers 43 verzichtet werden.

Die in Figuren 1 bis 4 gezeigte Ausführungsform des Seilroboters 1 weist einen Drehbereich von etwa 30° in jede Drehrichtung um die z₂-Achse auf. Um dem Greifer 43 des Roboterkopfs 40 einen ausreichenden Drehbereich von etwa 90° in jede Richtung zur Verfügung stellen zu können, weist das Planetengetriebe 50 ein Übersetzungsverhältnis von 1:3 auf, so dass durch ein Verdrehen der Befestigungsplatte 73 um 30° der Greifer 43 um 90° um die z₂-Achse verdreht wird.

In der in den Figuren 2 bis 4 gezeigten Ausführungsform ist das Übersetzungsgetriebe 50 als Planetengetriebe ausgeführt. Es sind aber alternativ auch andere Ausführungsformen von Übersetzungsgetrieben wie Stirnradgetriebe, Schneckengetriebe oder Reibradgetriebe denkbar.

In dem in der Ausführungsform gezeigten Planetengetriebe 50 wird zur Festlegung des Übersetzungsverhältnisses des Planetengetriebes 50 der Planetenträger 75 festgehalten und das Hohlrad 92 als Eingangsseite und das Sonnenrad 82 als Ausgangsseite des Planetengetriebes 50 verwendet. Es ist aber auch alternativ denkbar, den Planetenträger 75 als Eingangsseite mit der Befestigungsgruppe 70 zu verbinden und das Hohlrad 92 ausgangsseitig mit der Aktuatorgruppe 80 zu verbinden, wobei das Sonnenrad 82 des Planetengetriebes 50 hierbei mit dem Distanzstab 60 des Roboteraufbaus 5 drehfest verbunden ist. Selbstverständlich sind auch andere Kombinationen zur Festlegung des Übersetzungsverhältnisses des Planetengetriebes 50 denkbar.

In der Ausführungsform ist an der Arbeitsplatte 81 der Aktuatorgruppe 80 der Greifer 43 angeordnet. Selbstverständlich können anstelle des Greifers 43 verschiedenste andere Akuatoren angeordnet werden, die jeweils mit dem Einsatzzweck korrespondieren. Insbesondere sind anstelle des Greifers 43, Saugvorrichtungen, Tastvorrichtungen oder optische Vorrichtungen denkbar.

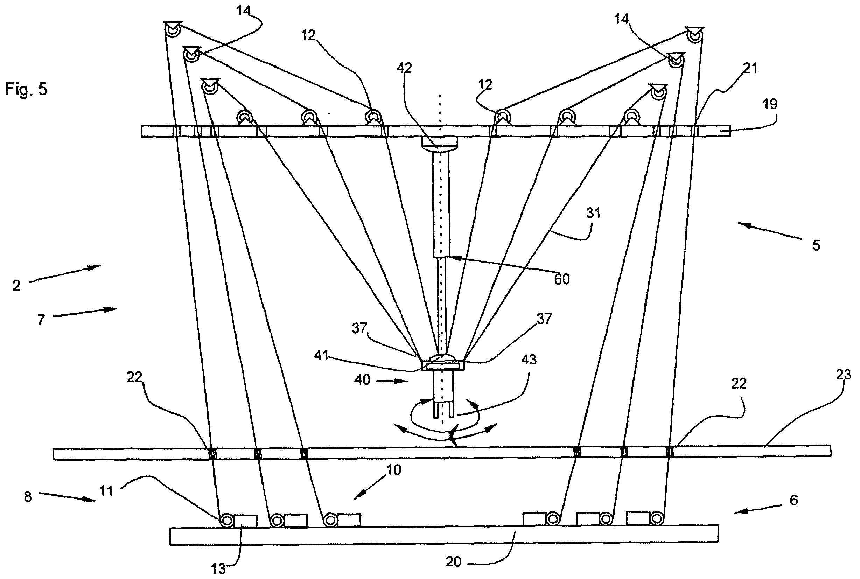

Figur 5 zeigt eine schematische Darstellung eines abgewandelten Roboters 2. Der abgewandelte Roboter 2 entspricht im Wesentlichen dem in Figuren 1 bis 4 dargestellten Seilroboter 1.

Der abgewandelte Seilroboter 2 weist einen Arbeitsraum 7, in dem der Roboteraufbau 5 angeordnet ist, und einen zum Arbeitsraum 7 abgekapselten Antriebsraum 8 auf. Der Roboteraufbau 5 weist zur Befestigung der Umlenkrollen 12 und des Distanzstabs 60 eine Trägerplatte 19 auf. Dabei sind die Umlenkrollen 12 oberseitig auf der zum Distanzstab 60 gegenüberliegenden Seite der Trägerplatte 19 angeordnet. Unterseitig ist an der Trägerplatte 19 des Roboteraufbaus 5 der Distanzstab 60 angeordnet. Des Weiteren sind zur Seilführung mehrere weitere Umlenkrollen 14 im Arbeitsraum 7 angeordnet. Ferner weist der abgewandelte Roboter 2 eine Trennwand 23 auf, die den Roboteraufbau 5 von dem Roboterantrieb 6 mit der Antriebsplattform 20 und den Seilzugantrieben 10 räumlich trennt.

Sowohl die Trägerplatte 19 als auch die Trennwand 23 weisen Seilzugdurchführungen 21, 22 auf, um die Seilzüge 31 bis 36 durch die Trägerplatte 19 bzw. die Trennwand 23 zu führen. Dabei sind die zweiten Seilzugdurchführungen 22 an der Trennwand 23 abgedichtet gegenüber dem Arbeitsraum 7 ausgeführt, so dass ein Gas-, Flüssigkeits- und/oder Feststoffaustausch zwischen dem Arbeitsraum 7 und dem Antriebsraum 8 vermieden wird. Dieser Aufbau des abgewandelten Seilroboters 2 eignet sich insbesondere für den Einsatz in der Lebensmittelindustrie. Dabei ist der Roboterantrieb 6 vor den in der Lebensmittelindustrie üblicherweise eingesetzten aggressiven Reinigungsmitteln geschützt in dem gegenüber dem Arbeitsraum 7 abgeschlossenen Antriebsraum 8 untergebracht, wodurch die Seilzugantriebe 10 unabgedichtet und kostengünstig ausgebildet sein können. Da der Roboteraufbau 5 bis auf den Greifer 43 keine weiteren Antriebe umfasst, kann der Roboteraufbau 5 kostengünstig ausgebildet sein.

Insbesondere wird darauf hingewiesen, dass die gezeigten Seilroboter 1, 2 in einer anderen bzw. abgewandelten Ausgestaltung verwirklicht werden können. Insbesondere können beispielsweise die Anordnung des ersten und/oder des zweiten Gelenks 41, 42 innerhalb der ersten und/oder der zweiten Befestigungsfläche 28, 29 je nach Einsatzzweck des Seilroboters 1, 2 frei gewählt werden. Auch ist denkbar, dass das erste und/oder das zweite Gelenk 41, 42 außerhalb der Ebene der ersten und/oder der zweiten Befestigungsfläche 28, 29 angeordnet ist. Ferner ist auch denkbar, wenigstens eines der beiden Gelenke 41, 42 starr auszubilden oder mit nur einem Freiheitsgrad versehen auszugestalten.

Alternativ zu der dargestellten Ausführungsform mit sechs Seilzugantrieben 10 ist jede beliebige Anzahl und Anordnung von Seilzugantrieben 10 mit Seilzügen 31 bis 36 denkbar. Wesentlich dabei ist, dass die Seilzugantriebe 10 die Befestigungsplatte 73 der Befestigungsgruppe 70 mittels der Seilzüge 31 bis 36 um ihre Flächennormale (z₂-Achse) bzw. um die Längsachse 63 des Distanzstabes 60 verdreht werden kann. Korrespondierend zu der Anzahl der Seilzüge 31 bis 36 können die Seilaufhängepunkte 12, 37 und die daraus gebildeten Befestigungsflächen 28, 29 alternativ zu den in der Ausführungsform vorgeschlagenen Variante jede beliebige Form aufweisen.

Ferner ist auch denkbar, dass ein Seilzugantrieb 10 wenigstens zwei Seilzüge 31 bis 36 gleichzeitig betätigt. Auch ist hierbei denkbar, dass wenigstens ein Seilzug 31 bis 36 derart an der Befestigungsgruppe 70 und an der Antriebsplattform 20 befestigt ist, dass die Länge des genannten Seilzuges 31 bis 36 unveränderlich ist.

Ferner ist denkbar, die in der Figur 1 dargestellten Seilzüge 31 bis 36 der Steuerarme beispielsweise durch Bowdenzüge, Schraubenstangen, druckbetätigte verfahrbare Hydraulik-/ Pneumatikzylinder oder andere Linearmotoren zu ersetzen.

Ferner wird darauf hingewiesen, dass der in der Ausführungsform gezeigte teleskopartige Distanzstab 60 mit einer veränderlichen Länge durch einen abgewandelten Distanzstab, dessen Länge festgelegt ist, ersetzbar ist.

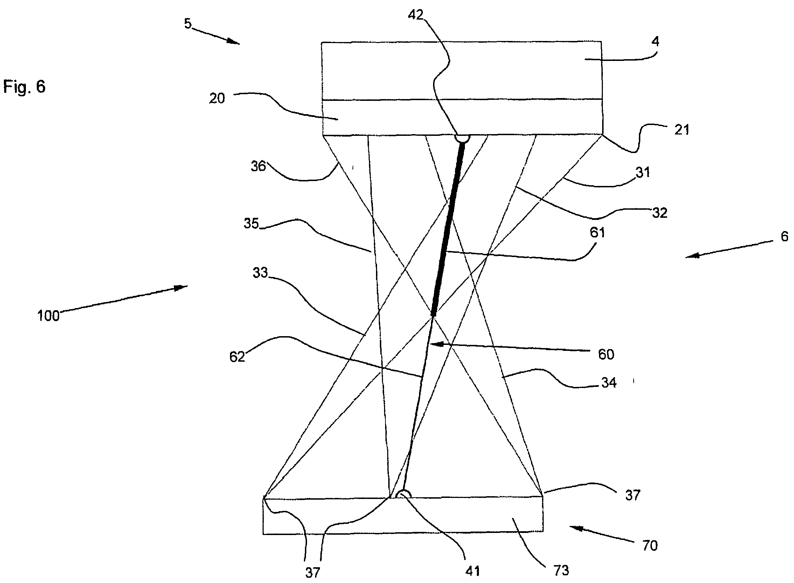

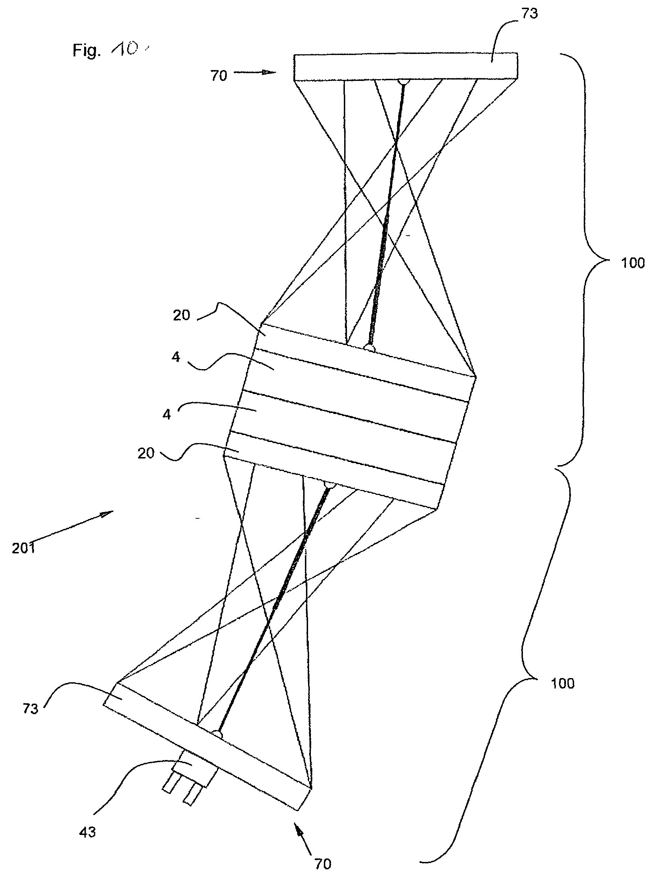

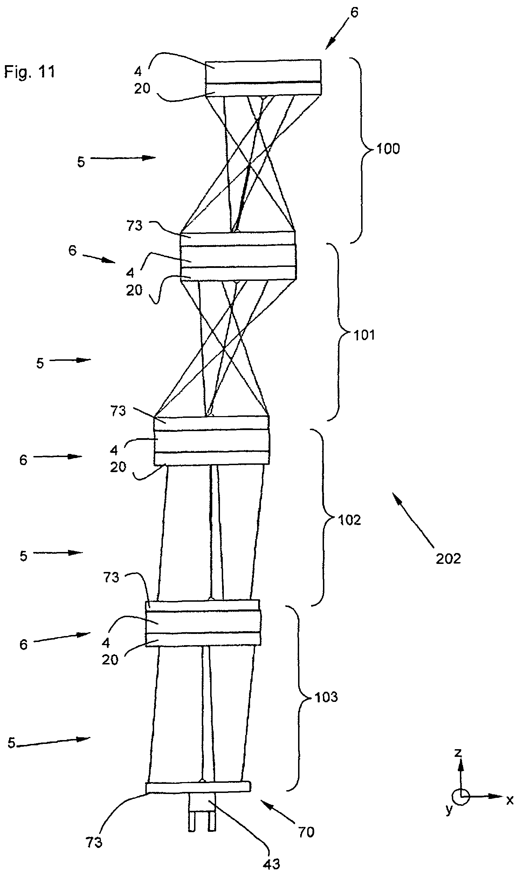

Die Figuren 10 und 11 zeigen zwei Ausführungsformen von Robotern in zusammengebautem Zustand, die mehrere Robotermodule unterschiedlicher Ausführungsform umfassen, auf die in den Figuren 6 bis 9 eingegangen wird.

Figur 6 zeigt eine schematische Darstellung des in Figur 1 dargestellten ersten Seilroboter als ein erstes Seilrobotermodul 100. Der Roboterantrieb 6 des ersten Seilrobotermoduls 100 umfasst eine in Figur 6 dargestellte Antriebsbox 4, die Einzelkomponenten in Zusammenhang mit Figur 1 erläutert sind. Die Antriebsbox 4 des Roboterantriebs 6 weist oberseitig nicht dargestellte Befestigungselemente auf, um die Antriebsbox 4 an einer korrespondierenden Antriebsbox 4 (vgl. Figur 10) oder an einem korrespondierenden Befestigungselement (vgl. Figur 11) zu befestigen. Zusätzlich kann die Antriebsbox 4 eine Kontakteinrichtung (nicht dargestellt) aufweisen, um den Roboterantrieb 6 mit einem Steuergerät und/oder einer Energieversorgung an einer komplementären Kontakteinrichtung eines Steuergeräts und/oder der Kontakteinrichtung anzuschließen. Ferner schützt die Antriebsbox 4 die in ihr angeordneten Komponenten vor Umwelteinflüssen. Im Bezug auf die weiteren in Figur 6 dargestellten Komponenten wird auf die vorstehende Beschreibung in Zusammenhang mit Figur 1 verwiesen.

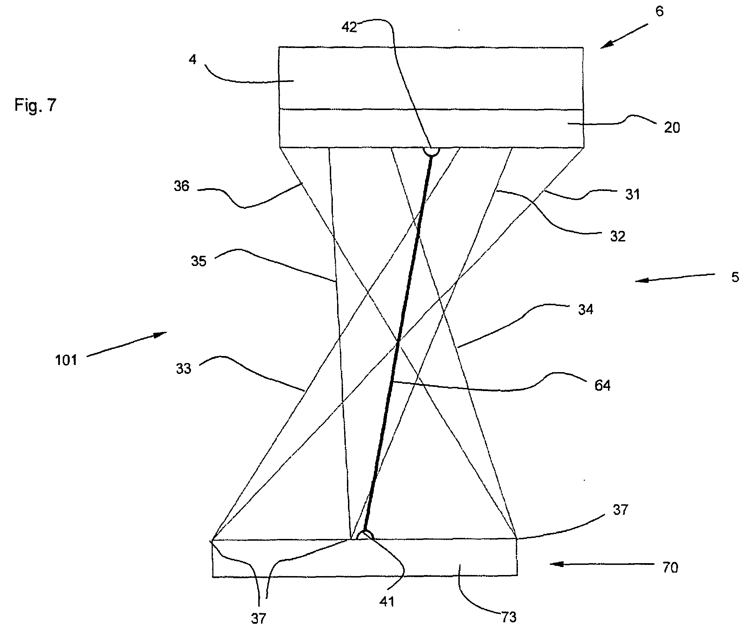

Figur 7 zeigt ein abgewandeltes zweites Seilrobotermodul 101, das auf dem in Figur 6 gezeigten ersten Seilrobotermodul 100 basiert. Abweichend von der in Figur 6 dargestellten Ausführungsform des ersten Seilrobotermoduls 100 umfasst das zweite Seilrobotermodul 101 anstelle des ersten Distanzstabs 60 einen zweiten Distanzstab 64, der eine unveränderliche Länge aufweist. Der zweite Distanzstab 64 ist wie auch der erste Distanzstab 60 mit dem schwenkbaren oberen ersten Gelenk 42 und einem schwenkbaren unteren zweiten Gelenk 41 an der Antriebsplattform 20 bzw. an der Arbeitsplatte 73 der Befestigungsgruppe 70 befestigt. Diese Ausführungsform gewährleistet, dass die Befestigungsgruppe 70 des zweiten Seilrobotermoduls 101 um die x₁-Achse und die y₁-Achse des zweiten Distanzstabs 64 gekippt werden kann. Ferner kann die Antriebsplattform 70 des Roboterkopfs 40 um die Flächennormale bzw. die z₂-Achse der Arbeitsplatte 73 der Befestigungsgruppe 70 rotiert werden. Durch die Festlegung des zweiten Distanzstabs 64 kann die Befestigungsgruppe 70 auf einer Kugelschale verfahren werden. Insgesamt werden durch das zweite Seilrobotermodul 101 fünf Achsen zur freien Bewegung der Befestigungsgruppe 70 zur Verfügung gestellt.

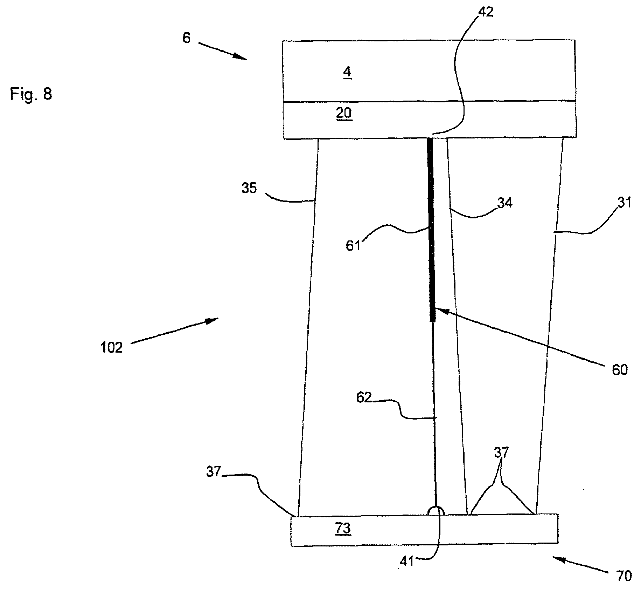

Figur 8 zeigt ein abgewandeltes drittes Seilrobotermodul 102, das auf dem in Figur 6 gezeigten ersten Seilrobotermodul 100 basiert. Das dritte Seilrobotermodul 102 entspricht im Wesentlichen dem in Figur 6 gezeigten ersten Seilrobotermodul 100. Das dritte Seilrobotermodul 102 weist drei Seilzüge 31, 34, 35 auf, die die Antriebsplattform 20 mit der Arbeitsplatte 73 der Befestigungsgruppe 70 verbinden. Im Unterschied zum ersten Seilrobotermodul 100 weist das Seilrobotermodul 102 keine in Figur 1 gezeigten Zusatzseilzüge 32, 33, 36 auf, so dass ein einfach ausgebildetes drittes Seilrobotermodul 102 zur Verfügung gestellt wird.

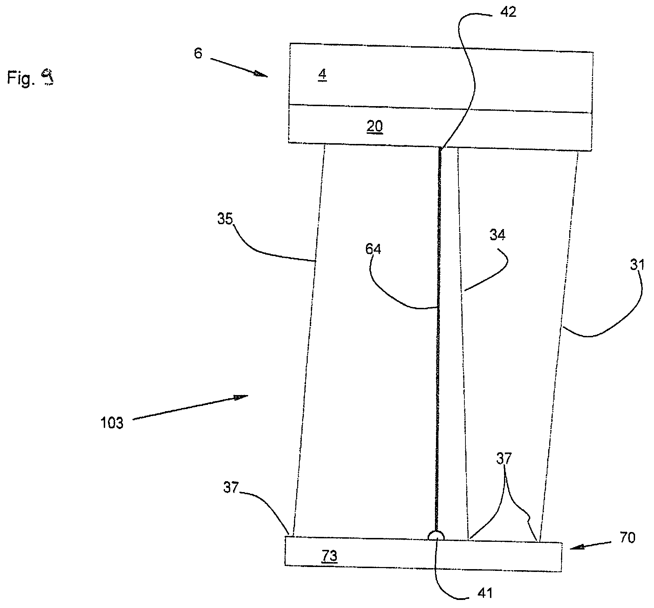

Um ein statisch bestimmtes Seilrobotermodul 102 bereitzustellen, ist der erste Distanzstab 60 in der in Figur 9 gezeigten Ausführungsform in dem oberen ersten Gelenk 42 starr mit der Antriebsplattform 20 verbunden. Das untere zweite Gelenk 41 ist, ebenso wie in Figuren 6 bis 8 gezeigt, schwenkbar ausgeführt.

Durch den in der Länge veränderlichen ersten Distanzstab 60 ist die Befestigungsgruppe 70 entlang der z-Achse der Antriebsplattform 20 verschiebbar. Ferner kann die Befestigungsgruppe 70 um die x₁-Achse und y₁-Achse des ersten Distanzstabs 60 geschwenkt sowie um die Flächennormale bzw. die z;-Achse der Arbeitsplatte 73 der Befestigungsgruppe 70 gedreht werden, so dass auf einfache Weise ein Seilrobotermodul 102 mit vier beweglichen Achsen zur Verfügung gestellt werden kann.

Figur 9 zeigt ein viertes Seilrobotermodul 103, das auf dem in Figur 3 gezeigten dritten Seilrobotermodul 102 basiert. Ferner ist die Arbeitsplatte 73 der Befestigungsgruppe 70 anstelle des ersten Distanzstabs mittels des zweiten Distanzstabs 64 verbunden. Der zweite Distanzstab 64 ist, wie in Figur 7 gezeigt, einstückig ausgebildet und weist eine unveränderliche Länge auf. Der zweite Distanzstab 64 ist im oberen ersten Gelenk 42 starr mit der Antriebsplattform 20 verbunden. An der Arbeitsplatte 73 der Befestigungsgruppe 70 ist der zweite Distanzstab 64 schwenkbar über das untere zweite Gelenk 41 befestigt.

Durch eine entsprechende Ansteuerung der Seilzugantriebe 10 der Seilzüge 31, 34, 35 kann die Arbeitsplatte 73 der Befestigungsgruppe 70 um die x₁-Achse und y₁-Achse des zweiten Distanzstabs 64 geschwenkt sowie um die z₂-Achse der Arbeitsplatte 73 verdreht werden.

Es wird darauf hingewiesen, dass die in den Figuren 6 bis 9 gezeigten Seilrobotermodule 100 bis 103 in einer anderen bzw. abgewandelten Ausgestaltung verwirklicht werden können. Beispielsweise können das in dem dritten und vierten Seilrobotermodul 102, 103 starr ausgebildete obere Gelenk 42 und das schwenkbar ausgebildete untere zweite Gelenk 41 in ihrer Anordnung vertauscht sein, so dass die Arbeitsplatte 73 der Befestigungsgruppe 70 starr mit dem ersten Distanzstab 60, 64 verbunden ist. Auch ist denkbar, beide Gelenke 41, 42 starr auszubilden.

Ferner ist alternativ denkbar, dass die Zusatzseilzüge 32, 33, 36 oder die Seilzüge 31, 34, 35 anstelle der in Figur 1 bis Figur 3 gezeigten Befestigung an der Arbeitsplatte 73 der Befestigungsgruppe 70 an dem oberen Teil 61 des ersten Distanzstabs 60 bzw. am zweiten Distanzstab 64 angeordnet sind. Auf diese Weise kann ein besonders schnelles Verfahren der Befestigungsgruppe 70 des Roboterkopfs 40 erreicht werden.

Figur 10 zeigt einen ersten Seilroboter 1 mit zwei in der Figur 6 gezeigten ersten Seilrobotermodulen 100. Der zweistufig kaskadiert ausgeführte erste Seilroboter 1 umfasst das oberseitig angeordnete erste Seilrobotermodul 100, das gegenüber der in Figur 6 gezeigten Anordnung um etwa 180° verdreht angeordnet ist. Das unterseitig angeordnete erste Seilrobotermodul ist in einem betätigten Zustand dargestellt.

Dabei sind die beiden ersten Seilrobotermodule 100 des ersten Seilroboters 201 mit ihren Antriebsboxen 4 aneinander angeordnet, wobei das oberseitige erste Seilrobotermodul 100 das unterseitig angeordnete Seilrobotermodul 100 über die Antriebsbox 4 trägt.

Die nach oben hin gerichtete Arbeitsplatte 73 der Befestigungsgruppe 70 dient in der gezeigten Ausführungsform zur Befestigung des oberseitigen ersten Seilrobotermoduls 100 an einem nicht dargestellten Trägergestell, wobei die Befestigungsgruppe 70 mittels der korrespondierenden Befestigungselemente an dem Trägergestell befestigt ist. Das unterhalb angeordnete Seilrobotermodul 100 weist an seiner Befestigungsgruppe 70 den Greifer 43 auf. Durch die Kombination der beiden sechsachsig ausgebildeten ersten Seilrobotermodule 100 wird ein Seilroboter mit zwölf Achsen bereitgestellt, die unabhängig voneinander betätigbar sind. Anstelle des oberseitig und/oder unterseitig angeordneten ersten Seilrobotermoduls 100 können stattdessen auch ein oder mehrere der in Figuren 7 bis 9 gezeigten Seilrobotermodule 101 bis 103 angeordnet sein. Dabei können die verschiedenen Seilrobotermodule 100 bis 103 entsprechend dem Einsatzzweck des ersten Seilroboters 1 miteinander kombiniert werden. So kann beispielsweise oberseitig das in Figur 9 gezeigte dritte Seilrobotermodul 102 mit dem unterseitig angeordneten zweiten Seilrobotermodul 101 kombiniert werden.

Der modulartige Aufbau der Seilrobotermodule 100 bis 103 hat ferner den Vorteil, dass die einzelnen Seilrobotermodule über an der Antriebsbox 4 und an der Arbeitsplatte 73 vorgesehene Schnittstellen und Befestigungselemente einfach und schnell miteinander kombinierbar sind, so dass ein schnell und einfach aufbaubarer erster Seilroboter 1 zur Verfügung gestellt werden kann. Dieser Vorteil wird auch durch die an der Befestigungsgruppe 70 und an der Antriebsbox 4 vorgesehenen Befestigungselemente und deren korrespondierende Befestigungselemente und/oder durch die an der Antriebsbox 4 und an der Befestigungsgruppe vorgesehene Kontakteinrichtung bzw. der korrespondierenden Kontakteinrichtung unterstützt, so dass auch eine schnelle Montage bzw. Demontage der Seilrobotermodule 100 bis 103 möglich ist.

Figur 11 zeigt einen kaskadierten zweiten Seilroboter 202, der modular mittels der in den Figuren 6 bis 9 gezeigten Seilrobotermodule 100 bis 103 aufgebaut ist. Die Ausrichtung der einzelnen Seilrobotermodule 100 bis 103 entspricht etwa der in Figuren 6 bis 9 gezeigten Ausrichtung der Seilrobotermodule 100 bis 103. Dabei ist mit der Antriebsbox 4 das in der Figur 6 gezeigte erste Seilrobotermodul 100 oberseitig an einem nicht dargestellten Trägergestell befestigt und trägt die im zweiten Seilroboter angeordneten und miteinander kombinierten Seilrobotermodule 100 bis 103. Unterseitig an der Antriebsplatte 73 des ersten Seilrobotermoduls 100 ist das zweite Seilrobotermodul 101 mit seiner Antriebsbox 4 befestigt. An der Befestigungsgruppe 73 des zweiten Seilrobotermoduls 101 ist die Antriebsbox 4 des dritten Seilrobotermoduls 102 befestigt. Die Arbeitsplatte 73 des dritten Seilrobotermoduls 102 dient zur Befestigung der Antriebsbox 4 des vierten Seilrobotermoduls 103, wobei dessen Befestigungsgruppe 70 den an der Arbeitsplatte 73 angeordneten Greifer 43 aufweist.

Die einzelnen Seilrobotermodule 100 bis 103 sind kaskadiert mit der Antriebsbox 4 an der jeweiligen Arbeitsplatte 73 des oberhalb angeordneten Seilrobotermoduls 100 bis 102 befestigt. Bei der in der Figur 11 gezeigten Anordnung können die einzelnen Seilrobotermodule 100 bis 103 flexibel aneinander angeordnet werden und entsprechend der notwendigen Achsen im Bereich des jeweiligen Seilrobotermoduls 100 bis 103 miteinander kombiniert werden. So ist denkbar, dass das in der Ausführungsform angeordnete zweite Seilrobotermodul 101 durch das vierte Seilrobotermodul 103 ersetzt wird, um den zweiten Seilroboter an einen bestimmten angeforderten kinematischen Bewegungsablauf anpassen zu können.

Durch die flexible Kombination der Seilrobotermodule 100 bis 103 in Anzahl und Anordnung kann ein flexibel ausgestalteter zweiter Seilroboter 2 zur Verfügung gestellt werden, der einfach an einen erforderlichen Bewegungsablauf und die damit einhergehenden Bewegungsachsen angepasst werden kann.

Ferner ist des Weiteren denkbar, dass die Seilzugantriebe 10 bzw. die Zusatzseilzugantriebe 9 für alle Seilrobotermodule 100 bis 103 in der Antriebsbox 4 des obersten ersten Seilrobotermoduls 100 angeordnet sind. Dabei werden die Seilzüge 31, 33, 34 bzw. die Zusatzseilzüge 32, 35, 36 beispielsweise mittels Bowdenzügen zu dem zweiten, dritten und vierten Seilrobotermodul 101, 102, 103 geführt, so dass ein besonders massenarmer zweiter Seilroboter 2 zur Verfügung gestellt werden kann. Ferner eignet sich dieser Aufbau besonders für den Einsatz in der Lebensmittelindustrie, da nur eine Antriebsbox 4 gegenüber dem Arbeitsraum des zweiten Seilroboters 2 abgedichtet sein muss, um die in der Antriebsbox 4 angeordneten Seilzugantriebe 10 bzw. die Zusatzseilzugantriebe 9 der Seilrobotermodule 100 - 103 vor den in der Lebensmittelindustrie eingesetzten aggressiven Reinigungsmitteln zu schützen.

## Patentansprüche

1. Robotermodul, aufweisend einen Roboterantrieb (6) und einen Roboteraufbau (5), der einen Distanzstab (60), einen Roboterkopf (40) und wenigstens einen Steuerarm (31 - 36) umfasst, wobei eine Antriebsplattform (20) des Roboterantriebs (6) und eine Befestigungsgruppe (70) des Roboterkopfs (40) über den Distanzstab (60) und den Steuerarm (31 - 36) miteinander verbunden sind, wobei der Roboterantrieb (6) ausgelegt ist, den Roboterkopf (40) mittels des Distanzstabs (60) und des Steuerarms (31 - 36) zu drehen, und wobei eine Befestigungsfläche (29) der Befestigungsgruppe (70) einen ersten Schwerpunkt und eine Befestigungsfläche (28) der Antriebsplattform (20) einen zweiten Schwerpunkt (27) aufweist, wobei der Distanzstab (60) in dem ersten Schwerpunkt und dem zweiten Schwerpunkt (27) angeordnet ist, **gekennzeichnet durch** eine Aktuatorgruppe (80), die mit der Befestigungsgruppe (70) mittels eines Übersetzungsgetriebes (50) gekoppelt ist, wobei das Übersetzungsgetriebe (50) ausgelegt ist, ein Verdrehen der Befestigungsgruppe (70) in eine Verdrehung der Aktuatorgruppe (80) gemäß eines vorbestimmten Übersetzungsverhältnisses umzusetzen.

2. Robotermodul nach Anspruch 1, wobei das Übersetzungsgetriebe (50) als Planetengetriebe (50) ausgebildet ist, wobei das Sonnenrad (82) des Planetengetriebes (50) mit der Akuatorgruppe (80) verbunden ist.

3. Robotermodul nach Anspruch 2, wobei ein Hohlrad (92) des Planetengetriebes (50) mit der Befestigungsgruppe (70) und wenigstens ein Planetenrad (76) des Planetengetriebes (50) mit dem Distanzstab (60) verbunden sind.

4. Robotermodul nach Anspruch 2 oder 3, wobei die Befestigungsgruppe (70) einen Planententräger (75) umfasst, wobei der Planetenträger (75) drehbar an einer Befestigungsplatte (73) der Befestigungsgruppe (70) gelagert ist, wobei die Befestigungsplatte (73) mit dem Steuerarm (31 - 36) verbunden ist, und wobei der Planetenträger (75) mit dem Distanzstab (60) verbunden ist.

5. Robotermodul nach Anspruch 4, wobei das Sonnenrad (82) des Planetengetriebes (50) mittels einem an dem Planetenträger (75) befestigten Befestigungsbolzen (84) axial gelagert ist.

6. Robotermodul nach Anspruch 4 oder 5, wobei die Befestigungsplatte (73) das Hohlrad (92) des Planetengetriebes (50) radial umfasst, wobei die Befestigungsplatte (73) eine erste radiale Lagerung (74) für den Planetenträger (75) und eine zweite radiale Lagerung (77) für die Aktuatorgruppe (80) bereitstellt und wobei das Hohlrad (92) zwischen der ersten Lagerung (74) und der zweiten Lagerung (77) angeordnet ist.

7. Robotermodul nach einem der Ansprüche 1 bis 6, wobei der Distanzstab (60) mit der Antriebsplattform (20) des Roboterantriebs (6) und mit dem der Befestigungsgruppe (70) des Roboterkopfs (40) jeweils über ein Gelenk (41, 42) torsionssteif gegenüber einer Verdrehung um eine Längsachse (63) des Distanzstabs (60) verbunden ist.

8. Robotermodul nach Anspruch 7, wobei das torsionssteife Gelenk (41, 42) als homokinetisches Gelenk oder Kardangelenk ausgebildet ist.

9. Robotermodul nach einem der Ansprüche 1 bis 8. wobei der Distanzstab (60) teleskopartig ausgebildet ist und eine veränderliche Länge aufweist.

10. Robotermodul nach einem der Ansprüche 1 bis 9, wobei als Steuerarme (31 - 36) wenigstens drei Seilzüge (31, 34, 35) mit korrespondierenden Seilzugantrieben (10) vorgesehen sind, wobei jeder Seilzug (31, 34, 35) in einem ersten Seilaufhängepunkt (37) mit der Befestigungsgruppe (70) und in einem zweiten Seilaufhängepunkt (12) mit der Antriebsplattform (20) verbunden ist, wobei die ersten Seilaufhängepunkte (37) der Befestigungsgruppe (70) eine erste Befestigungsfläche (29) und die zweiten Seilaufhängepunkte (12) der Antriebsplattform (70) eine zweite Befestigungsfläche (28) bilden.

11. Robotermodul nach Anspruch 10, wobei wenigstens drei Zusatzseilzüge (32, 33, 36) vorgesehen sind, wobei jeweils ein Seilzug (31, 34, 35) und ein Zusatzseilzug (32, 33, 36) benachbart nebeneinander angeordnet und in dem einem ersten Seilaufhängepunkt (37) des Seilzugs (31, 34, 35) an der Befestigungsgruppe (70) befestigt sind, wobei die Zusatzseilzüge (32, 33, 36) in weiteren zweiten Seilaufhängepunkten (12) an der Antriebsplattform (20) befestigt sind, wobei die zweiten Seilaufhängepunkte (12) der Seilzüge (31, 34, 35) ein erstes Dreieck (25) bilden, wobei die weiteren zweiten Seilaufhängepunkte (12) der Zusatzseilzüge (32, 33, 36) ein zweites Dreieck (26) bilden, und wobei das zweite Dreieck (26) gegenüber dem ersten Dreieck (25) verdreht ist.

12. Robotermodul nach Anspruch 11, wobei für jeden Zusatzseilzug (32, 33, 36) ein korrespondierender Zusatzseilzugantrieb (9) vorgesehen ist.

13. Robotermodul nach Anspruch 10 oder 11, wobei die ersten Seilaufhängepunkte (37) der Seilzüge (31, 34, 35) und der Zusatzseilzüge (32, 33, 36) jeweils einen ersten Abstand (b₁ - b₃) aufweisen, wobei die zweiten Seilaufhängepunkte (12) der Seilzüge (31, 34, 35) zu den benachbarten weiteren zweiten Seilaufhängepunkten (12) der Zusatzseilzüge (32, 33, 36) jeweils einen zweiten Abstand (d₁ - d₃) aufweisen, und wobei die ersten Abstände (b₁ - b₃) zu den korrespondieren dem zweiten Abständen (d₁ - d₃) im gleichen Verhältnis stehen.

14. Robotermodul nach einem der Ansprüche 10 bis 13, wobei der Seilzug (31 - 36) mittels einer Umlenkrolle (12) geführt ist, wobei die Umlenkrolle (12) am Roboterantrieb (6) angeordnet ist und eine Zugkraft des Seilzugs (31 - 36) zumindest teilweise abstützt.

15. Robotermodul nach einem der Ansprüche 1 bis14, umfassend eine Trennwand (23), die zwischen dem Roboterantrieb (6) und dem Roboteraufbau (5) angeordnet ist, wobei die Trennwand (23) den Roboterantrieb (6) räumlich von dem Roboteraufbau (5) trennt, und wobei die Trennwand (23) wenigstens eine abgedichtete Steuerarmführung (22) aufweist.

## Claims

1. Robot module having a robot drive (6) and a robot body (5), which comprises a spacer rod (60), a robot head (40) and at least one control arm (31-36), wherein a platform (20) of the robot drive (6) and a fastening group (70) of the robot head (40) are connected to one another via the spacer rod (60) and the control arm (31-36), wherein the robot drive (6) is designed to rotate the robot head (40) by means of the spacer rod (60) and the control arm (31-36), and wherein a fastening surface (29) of the fastening group (70) has a first centre of gravity and a fastening surface (28) of the drive platform (20) has a second centre of gravity (27), the spacer rod (60) being arranged in the first centre of gravity and the second centre of gravity (27), **characterized by** an actuator group (80), which is coupled to the fastening group (70) by means of a transmission gear mechanism (50), wherein the transmission gear mechanism (50) is designed to convert rotation of the fastening group (70) into rotation of the actuator group (80) in accordance with a predetermined transmission ratio.

2. Robot module according to Claim 1, wherein the transmission gear mechanism (50) is designed in the form of a planetary gear mechanism (50), wherein the sun wheel (82) of the planetary gear mechanism (50) is connected to the actuator group (80).

3. Robot module according to Claim 2, wherein a hollow wheel (92) of the planetary gear mechanism (50) is connected to the fastening group (70) and at least one planet wheel (76) of the planetary gear mechanism (50) is connected to the spacer rod (60).

4. Robot module according to Claim 2 or 3, wherein the fastening group (70) comprises a planet carrier (75), wherein the planet carrier (75) is mounted in a rotatable manner on a fastening plate (73) of the fastening group (70), wherein the fastening plate (73) is connected to the control arm (31-36), and wherein the planet carrier (75) is connected to the spacer rod (60).

5. Robot module according to Claim 4, wherein the sun wheel (82) of the planetary gear mechanism (50) is mounted axially by means of a fastening bolt (84), which is fastened on the planet carrier (75).

6. Robot module according to Claim 4 or 5, wherein the fastening plate (73) encloses the hollow wheel (92) of the planetary gear mechanism (50) radially, wherein the fastening plate (73) provides a first radial mounting (74) for the planet carrier (75) and a second radial mounting (77) for the actuator group (80), and wherein the hollow wheel (92) is arranged between the first mounting (74) and the second mounting (77).

7. Robot module according to one of Claims 1 to 6, wherein the spacer rod (60) is connected to the platform (20) of the robot drive (6), and to the fastening group (70) of the robot head (40), in each case via a joint (41, 42), in a torsionally rigid manner in relation to rotation about a longitudinal axis (63) of the spacer rod (60).

8. Robot module according to Claim 7, wherein the torsionally rigid joint (41, 42) is designed in the form of a homokinetic joint or universal joint.

9. Robot module according to one of Claims 1 to 8, wherein the spacer rod (60) is of telescopic design and has a variable length.

10. Robot module according to one of Claims 1 to 9, wherein at least three cable pulls (31, 34, 35) with corresponding cable-pull drives (10) are provided as control arms (31-36), wherein each cable pull (31, 34, 35) is connected to the fastening group (70), at a first cable-suspension point (37), and to the drive platform (20), at a second cable-suspension point (12), wherein the first cable-suspension points (37) of the fastening group (70) form a first fastening surface (29) and the second cable-suspension points (12) of the drive platform (70) form a second fastening surface (28).

11. Robot module according to Claim 10, wherein at least three additional cable pulls (32, 33, 36) are provided, wherein in each case one cable pull (31, 34, 35) and an additional cable pull (32, 33, 36) are arranged adjacent to one another and are fastened on the fastening group (70) at the one, first cable-suspension point (37) of the cable pull (31, 34, 35), wherein the additional cable pulls (32, 33, 36) are fastened on the drive platform (20) at further, second cable-suspension points (12), wherein the second cable-suspension points (12) of the cable pulls (31, 34, 35) form a first triangle (25), wherein the further, second cable-suspension points (12) of the additional cable pulls (32, 33, 36) form a second triangle (26), and wherein the second triangle (26) is rotated in relation to the first triangle (25).

12. Robot module according to Claim 11, wherein a corresponding additional cable-pull drive (9) is provided for each additional cable pull (32, 33, 36).

13. Robot module according to Claim 10 or 11, wherein the first cable-suspension points (37) of the cable pulls (31, 34, 35) and of the additional cable pulls (32, 33, 36) are spaced apart in each case by a first distance (b₁-b₃), wherein the second cable-suspension points (12) of the cable pulls (31, 34, 35) are spaced apart from the adjacent further, second cable-suspension points (12) of the additional cable pulls (32, 33, 36) in each case by a second distance (d₁-d₃), and wherein the first distances (b₁-b₃) relate to the corresponding second distances (d₁-d₃) by the same ratio.

14. Robot module according to one of Claims 10 to 13, wherein the cable pull (31-36) is guided by means of a deflecting roller (12), wherein the deflecting roller (12) is arranged on the robot drive (6) and at least partially supports a tensile force of the cable pull (31-36).

15. Robot module according to one of Claims 1 to 14, comprising a partition wall (23), which is arranged between the robot drive (6) and the robot body (5), wherein the partition wall (23) separates the robot drive (6) in space from the robot body (5), and wherein the partition wall (23) has at least one sealed control-arm guide (22).

## Revendications

1. Module de robot, présentant un entraînement de robot (6) et une structure de robot (5) qui comprend une barre d'espacement (60), une tête de robot (40) et au moins un bras de commande (31 - 36), une plate-forme d'entraînement (20) de l'entraînement de robot (6) et un groupe de fixation (70) de la tête de robot (40) étant connectés l'un à l'autre par le biais de la barre d'espacement (60) et du bras de commande (31 - 36), l'entraînement de robot (6) étant conçu de manière à faire tourner la tête de robot (40) au moyen de la barre d'espacement (60) et du bras de commande (31 - 36), et une surface de fixation (29) du groupe de fixation (70) présentant un premier centre de gravité et une surface de fixation (28) de la plate-forme d'entraînement (20) présentant un deuxième centre de gravité (27), la barre d'espacement (60) étant disposée dans le premier centre de gravité et dans le deuxième centre de gravité (27), **caractérisé par** un groupe d'actionneur (80) qui est accouplé au groupe de fixation (70) au moyen d'un réducteur (50), le réducteur (50) étant conçu de manière à convertir une rotation du groupe de fixation (70) en une rotation du groupe d'actionneur (80) suivant un rapport de démultiplication prédéterminé.

2. Module de robot selon la revendication 1, dans lequel le réducteur (50) est réalisé sous forme de transmission planétaire (50), la roue solaire (82) de la transmission planétaire (50) étant connectée au groupe d'actionneur (80).

3. Module de robot selon la revendication 2, dans lequel une couronne dentée (92) de la transmission planétaire (50) est connectée au groupe de fixation (70) et au moins un pignon satellite (76) de la transmission planétaire (50) est connecté à la barre d'espacement (60).

4. Module de robot selon la revendication 2 ou 3, dans lequel le groupe de fixation (70) comprend un porte-satellites (75), le porte-satellites (75) étant supporté de manière rotative sur une plaque de fixation (73) du groupe de fixation (70), la plaque de fixation (73) étant connectée au bras de commande (31 - 36), et le porte-satellites (75) étant connecté à la barre d'espacement (60).

5. Module de robot selon la revendication 4, dans lequel la roue solaire (82) de la transmission planétaire (50) est supportée axialement au moyen d'un boulon de fixation (84) fixé au porte-satellites (75).

6. Module de robot selon la revendication 4 ou 5, dans lequel la plaque de fixation (73) entoure radialement la couronne dentée (92) de la transmission planétaire (50), la plaque de fixation (73) fournissant un premier support sur palier radial (74) pour le porte-satellites (75) et un deuxième support sur palier radial (77) pour le groupe d'actionneur (80) et la couronne dentée (92) étant disposée entre le premier support sur palier (74) et le deuxième support sur palier (77).

7. Module de robot selon l'une quelconque des revendications 1 à 6, dans lequel la barre d'espacement (60) est connectée à la plate-forme d'entraînement (20) de l'entraînement de robot (6) et au groupe de fixation (70) de la tête de robot (40) à chaque fois par le biais d'une articulation (41, 42) de manière rigide en torsion par rapport à une rotation autour d'un axe longitudinal (63) de la barre d'espacement (60).

8. Module de robot selon la revendication 7, dans lequel l'articulation rigide en torsion (41, 42) est réalisée sous forme de joint homocinétique ou de joint de cardan.

9. Module de robot selon l'une quelconque des revendications 1 à 8, dans lequel la barre d'espacement (60) est réalisée sous forme télescopique et présente une longueur variable.

10. Module de robot selon l'une quelconque des revendications 1 à 9, dans lequel au moins trois câbles Bowden (31, 34, 35) avec des entraînements de câbles Bowden correspondants (10) sont prévus en tant que bras de commande (31 - 36), chaque câble Bowden (31, 34, 35) étant connecté dans un premier point d'accrochage de câble (37) au groupe de fixation (70) et dans un deuxième point d'accrochage de câble (12) à la plate-forme d'entraînement (20), les premiers points d'accrochage de câble (37) du groupe de fixation (70) formant une première surface de fixation (29) et les deuxièmes points d'accrochage de câble (12) de la plate-forme d'entraînement (70) formant une deuxième surface de fixation (28).

11. Module de robot selon la revendication 10, dans lequel au moins trois câbles Bowden supplémentaires (32, 33, 36) sont prévus, à chaque fois un câble Bowden (31, 34, 35) et un câble Bowden supplémentaire (32, 33, 36) étant disposés l'un à côté de l'autre et étant fixés dans le premier point d'accrochage de câble (37) du câble Bowden (31, 34, 35) au groupe de fixation (70), les câbles Bowden supplémentaires (32, 33, 36) étant fixés à la plate-forme d'entraînement (20) dans d'autres deuxièmes points d'accrochage de câble (12) à la plate-forme d'entraînement (20), les deuxièmes points d'accrochage de câble (12) des câbles Bowden (31, 34, 35) formant un premier triangle (25), les autres deuxièmes points d'accrochage de câble (12) des câbles Bowden supplémentaires (32, 33, 36) formant un deuxième triangle (26), et le deuxième triangle (26) étant tourné par rapport au premier triangle (25).

12. Module de robot selon la revendication 11, dans lequel pour chaque câble Bowden supplémentaire (32, 33, 36), il est prévu un entraînement de câble Bowden supplémentaire correspondant (9).

13. Module de robot selon la revendication 10 ou 11, dans lequel les premiers points d'accrochage de câble (37) des câbles Bowden (31, 34, 35) et des câbles Bowden supplémentaires (32, 33, 36) présentent à chaque fois une première distance (b₁ - b₃), les deuxièmes points d'accrochage de câble (12) des câbles Bowden (31, 34, 35) présentant à chaque fois une deuxième distance (d₁ - d₃) par rapport aux deuxièmes points d'accrochage de câble (12) supplémentaires adjacents des câbles Bowden supplémentaires (32, 33, 36), et les premières distances (b₁ - b₃) étant dans un rapport identique aux deuxièmes distances correspondantes (d₁ - d₃).

14. Module de robot selon l'une quelconque des revendications 10 à 13, dans lequel le câble Bowden (31 - 36) est guidé au moyen d'une poulie de renvoi (12), la poulie de renvoi (12) étant disposée au niveau de l'entraînement de robot (6) et supportant au moins en partie une force de traction du câble Bowden (31 - 36).

15. Module de robot selon l'une quelconque des revendications 1 à 14, comprenant une paroi de séparation (23) qui est disposée entre l'entraînement de robot (6) et la structure de robot (5), la paroi de séparation (23) séparant l'entraînement de robot (6) spatialement de la structure de robot (5), et la paroi de séparation (23) présentant au moins un guide de bras de commande étanchéifié (22).
